Europäisches Patentamt

European Patent Office

Office européen des brevets

(11) Publication number: **0 448 178 A1**

# EUROPEAN PATENT APPLICATION

(21) Application number: 91200630.1

(51) Int. Cl.5: **F23G 5/00, B01D 53/34**

(22) Date of filing: **20.03.91**

(30) Priority: **23.03.90 NL 9000694**

(43) Date of publication of application:
**25.09.91 Bulletin  91/39**

(84) Designated Contracting States:
**AT BE CH DE DK ES FR GB GR IT LI LU NL SE**

(71) Applicant: **STORK ALPHA ENGINEERING B.V.**
**Parallelweg 29**
**NL-1948 NK Beverwijk(NL)**

(72) Inventor: **Greefkes, Johannes**
**Laan der Nederlanden 88**
**NL-1946 AB Beverwijk(NL)**

(74) Representative: **Prins, Hendrik Willem et al**
**Octrooibureau Arnold & Siedsma**
**Sweelinckplein, 1**
**NL-2517 GK The Hague(NL)**

(54) Method and device for processing a waste product containing a metal fraction and a combustible material fraction.

(57) The invention relates to a method for processing a waste product comprising a metal fraction and a fraction containing combustible material, comprising the steps of:
  i) heating the waste product to a combustion temperature, wherein the combustible material is combusted;
  ii) separating released metal and ash;
  iii) cracking formed exhaust gas by heating the exhaust gas to a cracking temperature;
  iv) cooling the cracked exhaust gas;
  v) washing cooled exhaust gas;
  vi) precipitating metal compounds present in washing liquid; and
  vii) recirculating the precipitate containing metal compounds to the combustion stage for the waste product, and to a device therefor.

FIG.1

EP 0 448 178 A1

The present invention relates to a method and device for processing a waste product that comprises a metal fraction and a fraction containing combustible material.

The waste product processed according to the invention comprises cables, electrotechnical waste, computer chassis.

The metal fraction comprises metallic metal such as copper, lead, zinc, iron, aluminium and alloys. The combustible material comprises natural and synthetic materials, such as bitumen, jute, cellulose-type materials, plastics, such as polyethylene and polyvinyl chloride, but can generally be defined as materials which through combustion in combination with the metal fraction produce an ash residue which can be processed by metal smelters. This means that the ash residue can comprise as well as metal compounds and inorganic salts, inert material such as $SiO_2$, $Na_2O$ and $K_2O$.

During processing of such materials solid, liquid and gaseous waste flows are created. Increasingly stringent requirements will be imposed on these waste flows with respect to the pollutants present therein, and it is these pollutant-containing waste flows which determine to an important degree the industrial application of the method for processing the waste product.

A known method for processing this type of waste product is the so-called Shredder process. The waste product is reduced to very small particles, after which a metal fraction can be separated using known separation techniques, for example precipitation. This metal fraction is however still polluted with heavy metals. Moreover, other contaminated waste flows are created, for example in the form of dust particles in exhaust gas flows, which cannot simply be released into the environment. The Shredder process also requires a great deal of energy and produces a great deal of noise.

The invention has for its object to provide a method and a device for processing a waste product wherein substantially no chemical waste is released, while a precipitate separated from the exhaust gas and containing metal compounds is recirculated. Formed residue fractions (ash fractions, lead fraction) can moreover be further processed.

The method according to the invention for processing a waste product comprising a metal fraction and a fraction containing combustible material, is thus characterized by the steps of:

i) heating the waste product to a combustion temperature, wherein the combustible material is combusted;

ii) separating released metal and ash;

iii) cracking formed exhaust gas by heating the exhaust gas to a cracking temperature;

iv) cooling the cracked exhaust gas;

v) washing cooled exhaust gas;

vi) precipitating metal compounds present in washing liquid; and

vii) recirculating the precipitate containing metal compounds to the combustion step for the waste product.

Through burning of the waste product a metal fraction and an ash fraction can be separated therefrom which can both be further reprocessed, in addition to exhaust gas, from which metal compounds are separated by successively cracking, washing and precipitating in a form such that this precipitate can be recirculated and combusted. As a result of the combustion of the precipitate the combustion products are transferred mainly to the ash fraction which in addition to metal compounds contains inorganic salts and inert material.

The combustion of the waste product should take place in a continuous process with temperature control, since the waste product usually does not have a constant calorific value as a result of a varying composition. By burning a suitable fuel, such as domestic fuel oil and natural gas, and/or optimal primary and secondary, proportional combustion air control, compensation can be made for a variation in the calorific value, and the combustion temperature set and maintained at a pre-desired temperature. The combustion temperature generally lies between 450-700 °C. A maximum combustion temperature is in fact determined by the possible presence of lead which becomes volatile at relatively low temperatures. The vapour pressure of lead depends on the composition of the metal fraction and is sufficiently low to combustion temperatures of about 650 °C. The lead vapour pressure can however vary considerably with the composition of the waste product. The combustion temperature is however never so high that other metals present will melt. A minimum combustion temperature is that temperature where the combustible material is substantially combusted.

The burning of the waste product creates a number of product flows, namely: metal which after cooling is usually mechanically sorted, a liquid lead flow, an ash flow and, finally, exhaust gas. As a result of the maximum permissible combustion temperature the combustible material is not completely combusted. Therefore the exhaust gas is then cracked at a cracking temperature lying generally between 850 and 1250 °C. The cracking temperature however lies preferably between 900 and 1200 °C, for instance 1150 °C.

Cracking is necessary since the partially combusted compounds present in the exhaust gas unnecessarily load, block and/or contaminate the later separation units. The cracking temperature must however be sufficiently low that the installation has a useful life that is economically acceptable and an energy consumption that is not excessive. The exhaust gas generally remains at cracking temperature for more than 3 seconds, but this duration further depends on the combustion and cracking temperatures.

The cracked exhaust gas must be cooled as quickly as possible in order to suppress as far as possible side effects such as dioxin formation. Cooling to a temperature of about 300°C can take place by means of direct and indirect heat exchange, such as water quenching. Further cooling can then take place to a temperature of about 100-150°C.

Because of the total recirculation of the precipitate, the waste product to be processed and the chemicals and additives to be used are required to have a composition such that the formation of inorganic compounds and salts containing no metal element but, for example, alkaline and earth alkaline elements is avoided as far as possible.

The exhaust gas originating from the combustion process is washed in order to remove pollutants therefrom, whereby the washed exhaust gas can be released into the atmosphere.

In order to realize optimum processing conditions and to avoid unnecessary contamination and corrosion of the installation, the washing of the exhaust gas preferably comprises two washing steps, namely washing with an acid washing solution, followed by washing with an alkaline washing solution.

Water, possibly ground water polluted with metals, can in principle be used for the acid washing solution, since the acid compounds present in the exhaust gas, such as hydrochloric acid, will dissolve in the water, whereby the acid washing solution will obtain a pH generally lying between 1-2.

Because of the requirements for recirculation of the precipitate the alkaline washing solution preferably contains ammonia, possibly partially supplemented with sodium hydroxide or potassium hydroxide. The pH of the alkaline washing solution is generally between 5 and 7. Ground water polluted with metals can also be used for the alkaline washing solution.

After recirculation the loaded acid and alkaline washing solutions are optionally combined into a washing liquid which generally has a pH lying between 3-4.

The washed exhaust gas, from which as much of the metal compounds and organic and inorganic material as possible has been removed, is finally after-treated by being brought into contact with an adsorption material, such as calcium-free, weakly acid carbon, in which are adsorbed residues of organic compounds and acid compounds. Because the adsorption material likewise has a composition such that combustion thereof substantially does not produce any compounds other than metal compounds and combustible compounds, as well as substances permissible in ash (inorganic salts and inert material), the adsorption material can, after it has been loaded, be added to the combustion process, in which it is combusted with the waste product. A waste flow in the form of loaded adsorption material can thus also be processed in the process according to the invention.

Finally, the after-treated exhaust gas is heated and has a composition such that it can be released into the atmosphere.

The washing liquid loaded with metal compounds is subsequently treated such that the metal compounds are removed as far as possible therefrom and the purified washing water can be discharged into the environment. To precipitate the metal compounds present the pH of the washing liquid is raised to about pH 9-10 using ammonia optionally supplemented with sodium hydroxide.

For good floc formation of the formed metal hydroxides it is important that a coagulant, for example iron chloride or aluminium chloride, is added. The quantity of coagulant added depends on the chlorine concentration in the exhaust gas. The chlorine concentration in the exhaust gas depends in turn on the chlorine concentration in the waste product. The chlorine concentration is preferably held substantially constant by for example adding to the waste product chlorine-containing, combustible material, such as polyvinyl chloride.

A co-precipitation aid and optionally a polyelectrolyte as flocculent are also added.

The formed precipitate consisting for a significant part of metal compounds, such as metal hydroxides, is concentrated and de-watered, whereby separated water is recirculated to the unit in which the precipitate is formed.

The formed precipitate generally contains 20-50% by weight of metal compounds. The precipitate further contains inorganic salts and inert material. The precipitate is fed back to the combustion furnace and after combustion a significant portion of the components from the precipitate is transferred herefrom into the ash fraction.

This ash fraction can be transported to smelters, since the composition of the precipitate complies with the requirements set for smelters. For chlorine these requirements are less than 2% by weight at a metal content of about 30% by weight.

In the method according to the invention for processing a waste product groundwater can be used which is polluted with metal compounds. These metal compounds are removed from the waste water during the precipitation and after oombustion the metals originating from the groundwater are transferred either into the ash fraction or into the liquid lead flow. The purified water can be drained to the sewer. It is thus possible to perform this method at a location, where the ground is polluted with metal and other compounds and, by pumping up groundwater, further spreading of the ground pollution is prevented.

The invention further relates to a device in which the above described method can be performed. This device is characterized according to the invention in that it comprises:

i) a continuous combustion furnace with an intake for the waste product, a discharge for released metal, an ash discharge and optionally a discharge for liquid lead;

ii) a cracking unit connected to the combustion furnace via an exhaust gas line;

iii) a cooling unit connected to the cracking unit via a cracking gas line;

iv) a washing unit with at least one inlet and one outlet for washing liquid, which washing unit is connected to the cooling unit via an exhaust gas line and which is connected to a chimney; and

v) a precipitation unit for precipitating metal compounds out of the washing liquid, which precipitation unit is connected to the combustion furnace via a precipitate line.

Mentioned and other features of the method and device according to the invention will be further elucidated hereinafter with reference to a non-limiting embodiment which serves purely as illustration of the invention.

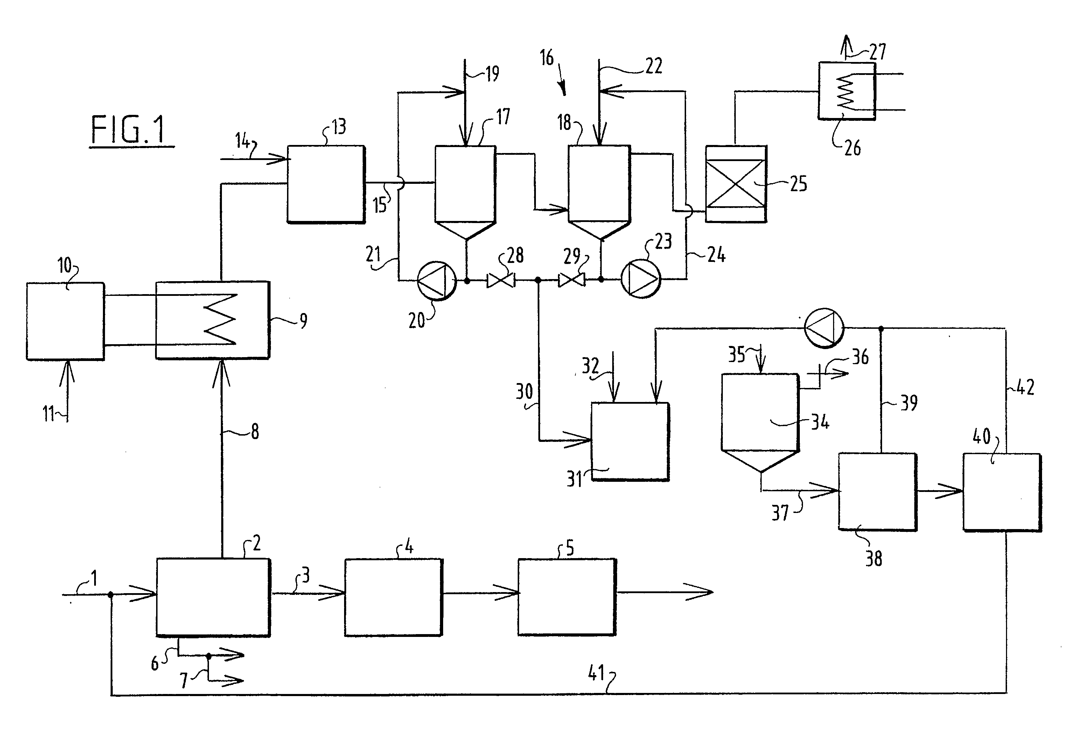

In the drawing figure 1 is a flow diagram for processing a waste product containing metal and combustible material, namely ground cables containing bitumen, to which is added waste containing 10% polyvinyl chloride.

The waste product 1, bitumen-holding ground cables which are cut into pieces of about 1 metre in length and mixed with waste containing 10% polyvinyl chloride, is fed at a flow rate of 1,500 kg per hour to a continuous combustion furnace, for example a sinter belt furnace. In the combustion furnace 2 the waste product 1 is combusted at a temperature of about 600° C. Due to the combustion the waste product 1 is converted into a number of product flows.

Released metal is carried via a discharge 3 to a cooling unit 4, whereafter the cooled metal strands are transferred to a sorting belt 5 and are sorted manually.

Liquid lead resulting from combustion is discharged via a discharge 6 after separation from ash which in addition to metal compounds contains inorganic salts and inert material. The ash is discharged via the ash drain 7.

Finally, exhaust gas formed during combustion is fed via an exhaust gas line 8 to a regenerative heat exchanger 9, in which the exhaust gas is brought to a cracking temperature of about 1150° C. The heat necessary for heating the exhaust gas to the cracking temperature is provided by burning fuel 11 in a combustion unit 10. The exhaust gas is at the cracking temperature for about three seconds, and is then carried via a cracking gas line 12 to a cooling unit 13, in which using water 14 the cracked exhaust gas is quenched or cooled to a temperature of about 300° C.

The exhaust gas is carried via an exhaust gas line 15 to a washing unit 16. The washing unit is formed by an acid washing unit 17 and an alkaline washing unit 18.

In the acid washing unit the exhaust gas is washed with polluted groundwater 19 that is recirculated via a recirculation line 21 provided with a pump 20.

In the same way the acid washed exhaust gas is then washed with an alkaline washing solution 22, which is prepared from groundwater to which ammonia and optionally sodium hydroxide have been added to obtain a pH of 5-7. The alkaline washing solution is recirculated via a recirculation line 24 provided with a pump 23.

The washed exhaust gas is then carried through an adsorption column 25, which is filled with a weakly acid, calcium-free carbon. The exhaust gas is finally heated in a heating unit 26 and released via a chimney 27.

The loaded acid washing solution and alkaline washing solution are discharged via the respective valves 28 and 29 in doses and in combination via the washing liquid line 30. The washing liquid has a pH of 3-4 and is fed to a multi-stage mixer 31. In the multi-stage mixer 31 are successively added an alkali solution, for example $NH_4 OH$, a coagulant, for example iron trichloride, and a co-precipitation additive, for example TMT15 from Degussa.

Through addition of alkali solution the liquid in the mixer 31 obtains a pH of about 9, whereby metal hydroxides are created and mutually aggregate into flocs.

In a clarifier 34 a polyelectrolyte 35 is added and separated effluent 36 containing dissolved salts is

EP 0 448 178 A1

released optionally after filtration of residual floating dust particles.

The precipitate is fed via the line 37 to a concentrator 38. Of the concentrated precipitate in general 30-70% and in this case 50% is recirculated via the line 39 to the mixer 31.

The remaining part of the concentrated precipitate is de-watered in a de-watering unit 40, whereafter the de-watered precipitate is fed back to the furnace 2 via the routing 41. Water released during de-watering is fed back to the mixer 31 via the line 42.

Shown in the following table is the composition for the non-cleaned exhaust gas. After the cleaning described herein the exhaust gas will virtually comply with the combustion guidelines 1989 (Combustion Guidelines, Ministry of Environment (VROM), August 1989).

| | non-cleaned exhaust gas (kg/h) |
|---|---|
| CO | 0.6 |
| HCl | 10 |
| Dust | 7 |
| $SO_2$ | 4 |
| $H_2S$ | 0.5 |
| HF | 0.1 |
| Pb (gas + dust) | 0.5 |
| Cu (gas + dust) | 0.1 |
| Zn (gas + dust) | 0.1 |
| Sb (gas + dust) | 0.02 |
| $NO_x$ | 0.6 |
| PC DD (ng $TEQ/m^3$) | 0.1 |
| PC DF (ng $TEQ/m^3$) | 0.1 |

based on 19,000 kg/hr exhaust gas

Claims

1. Method for processing a waste product comprising a metal fraction and a fraction containing combustible material, comprising the steps of:
   i) heating the waste product to a combustion temperature, wherein the combustible material is combusted;
   ii) separating released metal and ash;
   iii) cracking formed exhaust gas by heating the exhaust gas to a cracking temperature;
   iv) cooling the cracked exhaust gas;
   v) washing cooled exhaust gas;
   vi) precipitating metal compounds present in washing liquid; and
   vii) recirculating the precipitate containing metal compounds to the combustion stage for the waste product.

5

2. Method as claimed in claim 1, wherein washing of the exhaust gas comprises of:
   v-a) washing with an acid washing solution; and
   v-b) washing with an alkaline washing solution.

3. Method as claimed in claim 1 or 2, wherein the washing solution substantially contains no earth alkaline metals.

4. Method as claimed in claims 1-3, wherein the washed exhaust gas is brought into contact with an adsorption material.

5. Method as claimed in claim 4, wherein the adsorption material is an adsorption material free of earth alkaline metal.

6. Method as claimed in claim 4 or 5, wherein loaded adsorption material is recirculated to the combustion stage for the waste product.

7. Method as claimed in claims 2-6, wherein the acid and alkaline washing solutions loaded with metal compounds are combined to a waste water flow for cleaning.

8. Method as claimed in claims 1-7, wherein a flocculent and a precipitation additive are added to the loaded waste water flow.

9. Method as claimed in claims 1-8, wherein polluted groundwater is used for the washing solution.

10. Method as claimed in claims 1-9, wherein the waste product contains lead, and liquid lead is separated from the released metal and ash.

11. Method as claimed in claims 1-10, wherein combustible material containing chlorine is added to the waste product.

12. Method as claimed in claims 1-11, wherein the combustion temperature lies between about 450 and 700°C.

13. Method as claimed in claims 1-12, wherein the cracking temperature lies between about 850 and 1250°C, preferably between about 900 and 1200°C.

14. Method as claimed in claims 1-13, wherein the recirculated precipitate contains 20 to 50% by weight of metal compounds.

15. Method as claimed in claims 1-14, wherein the separated precipitate is partially recirculated to the precipitation step.

16. Device for processing a waste product comprising a metal fraction and a fraction containing combustible material, comprising:
    i) a continuous combustion furnace with an intake for the waste product, a discharge for released metal, an ash discharge and optionally a discharge for liquid lead;
    ii) a cracking unit connected to the combustion furnace via an exhaust gas line;
    iii) a cooling unit connected to the cracking unit via a cracking gas line;
    iv) a washing unit with at least one inlet and one outlet for washing liquid, which washing unit is connected to the cooling unit via an exhaust gas line, and which is connected to a chimney; and
    v) a precipitation unit for precipitating metal compounds out of the washing liquid, which precipitation unit is connected to the combustion furnace via a precipitate routing.

17. Device as claimed in claim 16, wherein the washing unit comprises:
    iv-a) an acid washing unit with an inlet for an acid washing solution; and
    iv -b) an alkaline washing unit with an inlet for an alkaline washing solution.

18. Device as claimed in claim 17, wherein outlets for loaded acid and alkaline washing solutions come together in a common discharge for washing liquid.

19. Device as claimed in claims 16-18, wherein connected after the washing unit is an adsorption column for washed exhaust gas.

20. Device as claimed in claim 19, wherein the adsorption material is an adsorption material free of earth alkaline metal.

21. Device as claimed in claims 16-20, wherein an outlet for washing liquid is connected to a groundwater line.

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 335 033   (ELKEM TECHNOLOGY)<br>* Figures 1,2; column 6, line 1 - column 8, line 5 *<br>– – – | 1,2,7,15,<br>16 | F 23 G 5/00<br>B 01 D 53/34 |
| A | WO-A-8 606 151   (A. GRISAR)<br>– – – | | |
| A | JAPCA, INT. JOURNAL OF THE AIR POLLUTION CONTROL ASSOCIATEN, vol. 37, no. 5, May 1987, pages 558-586, Pittsburgh, PA, US; E.T. OPPELT: "Incineration of hazardous waste"<br>– – – | | |
| A | JAPCA - INT. JOURNAL OF THE AIR POLLUTION CONTROL ASSOCIATION, vol. 36, no. 8, August 1986, pages 922-931, Pittsburgh, PA, US; C.C. LEE et al.: "Harzardous/toxic waste incineration"<br>– – – – – | | |

|  | TECHNICAL FIELDS SEARCHED (Int. Cl.5) |
|---|---|
| | F 23 G<br>B 01 D |

The present search report has been drawn up for all claims

| Place of search | Date of completion of search | Examiner |
|---|---|---|
| The Hague | 27 June 91 | BOGAERTS M.L.M. |